# EUROPEAN PATENT SPECIFICATION

(11) **EP 3 620 412 B1**
(45) Date of publication and mention of the grant of the patent: **05.05.2021**
(21) Application number: 19189389.0
(22) Date of filing: 31.07.2019
(51) Int. Cl.: B65G 47/51

(54) **LOG ACCUMULATOR PROVIDED WITH A LOG WEIGHING SYSTEM**
MIT EINEM ROLLWIEGESYSTEM AUSGESTATTETER ROLLSAMMLER
ACCUMULATEUR DE ROULEAUX DOTÉ D'UN SYSTÈME DE PESÉE DE ROULEAUX

(30) Priority: 07.09.2018 IT 201800008411
(43) Date of publication of application: 11.03.2020
(73) Proprietor: Paper Converting Machine Company S.p.A, 55051 Barga (LU) (IT)
(72) Inventor: MOSCARDINI, Emiliano, 55051 Barga (Lucca) (IT)
(74) Representative: Petruzziello, Aldo

(56) References cited:
- EP-A1- 2 670 689
- DE-T2- 69 601 575
- US-A- 4 168 776

## Description

The subject of the present invention is a log accumulator provided with a log weighing system.

As is known, in the paper processing industry for the production of rolls of tissue paper, kitchen paper, toilet paper, and the like, starting from a mother reel of sheet material, logs or sticks are produced to be subjected to subsequent processing, in particular transverse cutting to the desired sizes.

During the production process, the single logs are weighed to check that they are within the set parameters. If the weight of a log deviates, more or less, from the predetermined weight, the upstream machines are regulated to restore the starting conditions.

Currently, the weighing of logs is carried out in line with in-motion or static scales, inserted in the path of the logs.

In both cases, the line layout is lengthened, since the scales have surfaces of a certain length.

In the case of in-motion scales, i.e. those that weigh the log on the fly, while it rolls on them, the weighing of the log is not precise, as the weight is influenced by the dynamics and also by the geometry of the log (for example, not perfectly circular).

In the case of static scales, on the other hand, the cycle times are lengthened.

The object of the invention is to eliminate the disadvantages of known log weighing systems.

In particular, one of the objects of the invention is to avoid a lengthening of the layout of the production line due to the presence of the weighing scales.

Another object of the invention is to provide an accurate weighing of the logs, without this affecting substantially the cycle time.

The invention stems from the observation that in a log production line an accumulator is provided, i.e. a machine with a plurality of channels carried by chains arranged in a serpentine between an inlet and an outlet of the logs, with the possibility of adjusting the distance that each log must cover between the inlet and the outlet according to the production speeds of the machines upstream and downstream of the accumulator.

Such an accumulator, disclosing the features of the preamble of claim 1, is described, for example, in EP 2 670 689 A1.

The invention therefore proposes to integrate the log weighing system in the accumulator, as disclosed by the independent claim 1.

Advantageous embodiments of the invention are disclosed by dependent claims.

Substantially, the accumulator of logs in sheet material according to the invention, to be placed between an upstream log production line and a downstream line for subsequent processing, such as cutting into rolls of a predetermined width, comprises a plurality of channels for supporting and moving the logs between an inlet station and an outlet station according to a closed loop path determined by chains forming a plurality of serpentines, in which said accumulator has, at said inlet station, a system of static weighing of the logs.

Further features of the invention will be made clearer by the detailed description that follows, referred to one of its embodiments purely by way of a non-limiting example, illustrated in the accompanying drawings in which:
Figure 1 is a schematic side elevation view of a log accumulator;
Figures 2 and 3 are schematic perspective views from different angles of the inlet part of Figure 1 with some enlarged details;
Figures 4, 5 and 6 are schematic side elevation views of the inlet part of the accumulator, showing in succession an incoming log for weighing, during weighing and after weighing;
Figures 7, 8 and 9 are partial perspective views showing the same configurations as Figures 4, 5 and 6, taken from the opposite side with respect to them.

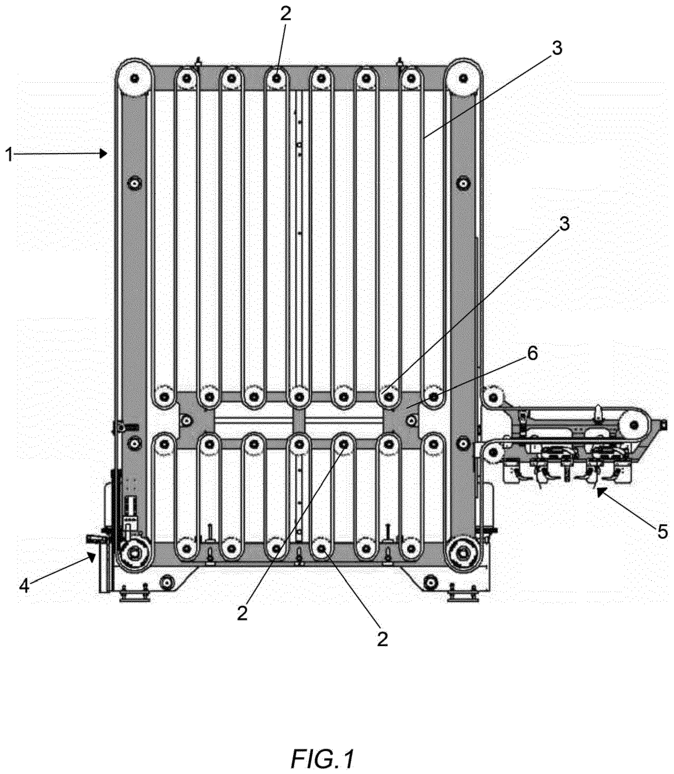

Figure 1 shows a log accumulator, denoted overall by reference numeral 1, which is placed in a log production line and serves to accumulate and transfer the logs into downstream stations for further processing, in particular cutting into rolls of pre-set length.

The accumulator 1 comprises a plurality of channels for supporting the logs, mounted between two chains 3 (only one can be seen in the view in Figure 1) positioned at the sides of the machine structure, determining a serpentine path, with upward and downward advancement between the drive wheels 2.

Chains 3 are arranged between an inlet station 4 and an outlet station 5 of the logs, with a closed loop path, and with the formation of serpentines both in the forward path between inlet and outlet and in the return path between outlet and inlet.

In fact, a vertically movable crosspiece 6 is provided in the accumulator, designed to vary the total path of the logs between inlet and outlet, so as to compensate for differences in production speed between upstream line and downstream line. When the speed of the upstream line is higher than that of the downstream line, or the downstream processes are temporarily stopped, and therefore there is a need to accumulate the logs, the movable crosspiece 6 is moved downwards, so as to increase the distance that the logs must travel between the inlet and the outlet. When, instead, the upstream machines have a lower speed than the downstream machines or are not producing logs, the movable crosspiece is moved upwards, thus reducing the distance that the logs have to travel to reach the outlet.

The accumulator 1 shown in Figure 1 can be considered substantially in itself known and has been briefly described only to introduce the subject of the invention shown in the following drawings, with which it is equipped.

The feature of the invention consists in having placed at the inlet 4 of accumulator 1 a station 10 for weighing logs, which will now be further described.

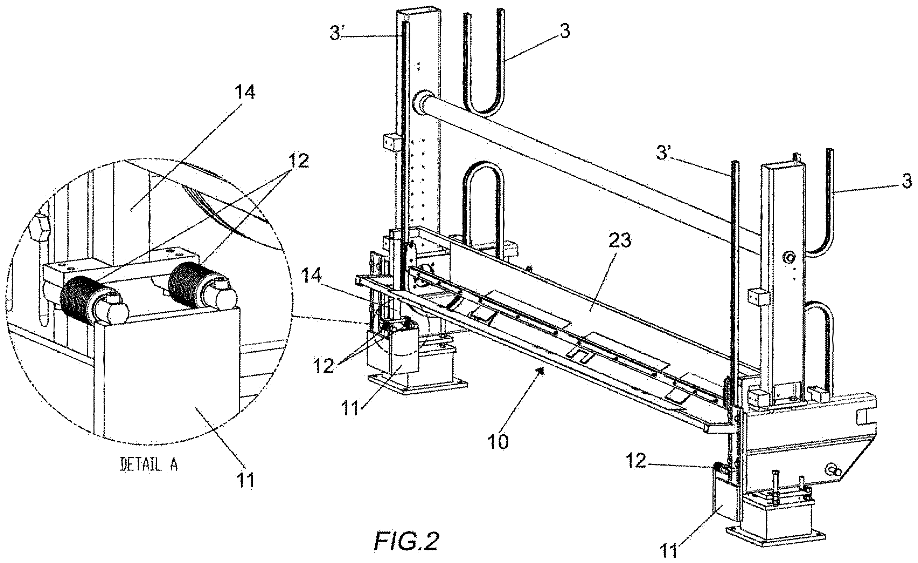

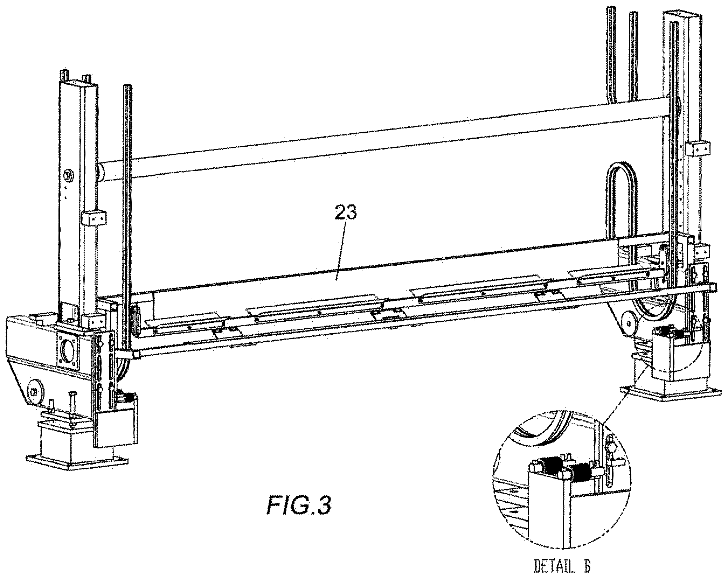

The weighing station 10 comprises, at the two sides of the machine, respective supports 11 for load cells 12 (can be seen more clearly in the enlargements of Figures 2 and 3) above which a structure 14 of scales and log support during the weighing is placed.

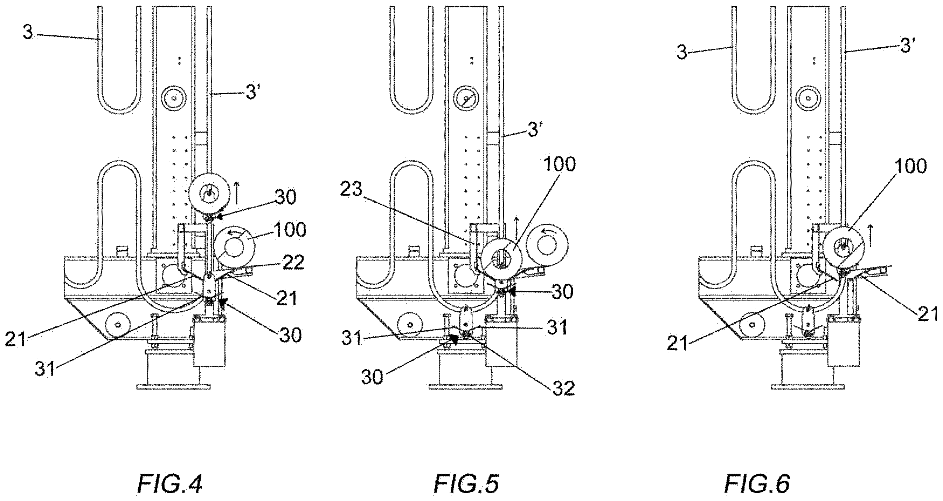

In particular, for the support of the logs (denoted by reference numeral 100 in the accompanying drawings) during the weighing, a cradle 20 is provided, formed by opposing plates 21, converging downwards and determining an empty space between them, as can be seen in Figures 4, 5 and 6.

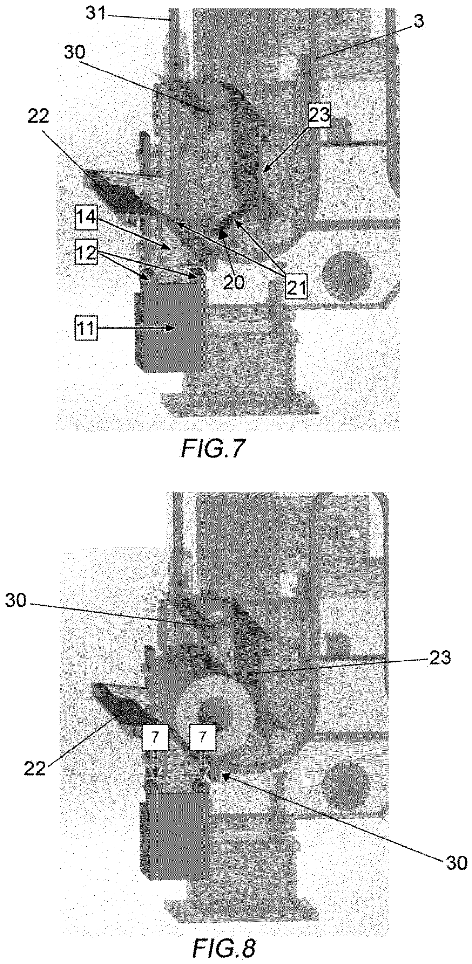

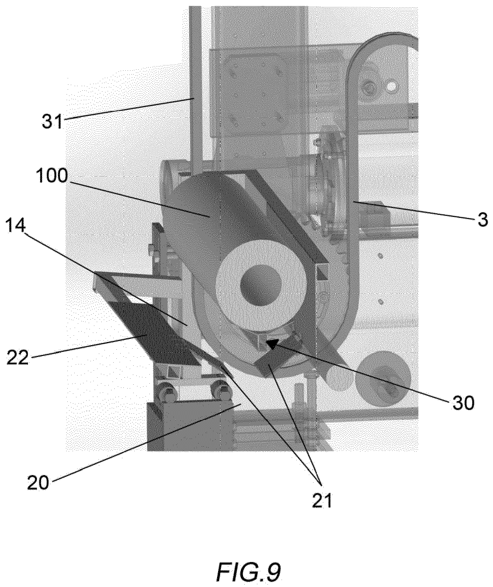

Naturally these plates 21 are not continuous, but instead discontinuous, and optionally also staggered one in relation to the other, as shown schematically in Figures 7, 8 and 9.

The cradle 20 for support of log 100 during weighing is substantially arranged in axis with the channels 30 for support and handling of the logs in the first vertical section 3' of chains 3. In other words, the centre line of the cradle 20 is located approximately on the same vertical plane where the centre line of the channels 30 advancing in said first vertical section 3' of the chains 3 is located.

The channels 30 consist of side plates 31 forming a V seen in profile, supported by a transverse bar 32.

The channels 30 have a width smaller than the width of the cradle 20, and the plates 31 are not continuous but discontinuous, like the plates 21, and are staggered with respect to the latter, so that they can be interspersed and traversed in their upward movement, dragged by the chains 3, as will be explained in greater detail below.

The side view Figures 4, 5 and 6 and the corresponding perspective views 7, 8, 9 show the successive phases of a cycle of weighing of a log 100.

In Figure 4 a formed log 100 is shown arriving on an inlet chute or plane 22 towards the cradle 20.

In Figure 5 the log is shown in position for weighing in the cradle 20, behind which a vertical abutment plate 23 is provided, designed to facilitate the fall of the log 100 into the cradle 20. In this position a static weighing of the log is carried out with the load cells 12.

Figure 6 shows a subsequent position of log 100 which is taken from a channel 30 below, which passes through cradle 20 and drags it upwards along the frontal section 3' of chains 3.

The advantages of the invention, in which the logs are weighed in accumulator 1, thus avoiding a lengthening of the line layout due to the presence of the weighing scales, as was the case in the prior art, are made clear from the above.

The weighing then takes place statically, and therefore with greater precision with respect to in-motion weighing in which the log is rolled onto the scales.

Finally, the weighing does not substantially affect the production cycle of the machine, in that it is carried out in the time of passage between one channel and the next.

Naturally the invention is not limited to the particular embodiment previously described and illustrated in the accompanying drawings, but numerous detail changes may be made thereto within the reach of the person skilled in the art, without thereby departing from the scope of the invention itself, as defined in the appended claims.

## Claims

1. Accumulator (1) of logs (100) in sheet material to be placed between an upstream log production line and a downstream line for subsequent processing, such as cutting into rolls of predetermined width, comprising a plurality of channels (30) for supporting and moving the logs (100) between an inlet station (4) and an outlet station (5) along a closed loop path determined by chains (3) forming a plurality of serpentines, **characterised in that** said accumulator (1) has, at said inlet station (4), a system of static weighing (10) of the logs (100).

2. Accumulator according to claim 1, **characterised in that** said weighing system (10) comprises a transverse cradle (20) for supporting the logs carried by lateral structures (14) mounted on load cells (22).

3. Accumulator according to claim 2, wherein said cradle (20) consists of discontinuous lateral plates (21), converging downwards and determining an empty space between them.

4. Accumulator according to claim 3, **characterised in that** said channels (30) have a width smaller than said cradle (20) and consist of divergent, discontinuous lateral plates, rising from a transverse bar (32) and intercalated between said plates (21) of the cradle (20).

5. Accumulator according to any one of claims 2 to 4, **characterised in that** it comprises a chute (22) and an approximately vertically abutment surface (23), placed respectively upstream and downstream of the cradle (20) to facilitate the drop of logs into the cradle (20).

6. Accumulator according to claim 4, wherein the centre line of the cradle (20) is located approximately on the same vertical plane where the centre line of the channels (30) advancing in the first vertical section (3') of the chains (3) is located.

7. Accumulator according to any one of the preceding claims, wherein in the accumulator there is provided a vertically movable crosspiece (6) designed to form serpentines both in the forward path between the inlet (4) and the outlet (5) of the logs, and in the path of return between outlet and inlet, the movement of said crosspiece (6) varying the total path of the logs between inlet and outlet, so as to compensate the differences in production speed between the upstream line and the downstream line.

## Patentansprüche

1. Sammler (1) von Logs (100) in Bahnmaterial, die zwischen einer stromaufwärtigen Log-Produktionslinie und einer stromabwärtigen Linie zur nachfolgenden Verarbeitung angeordnet werden sollen, beispielsweise zum Schneiden in Rollen von vorbestimmter Breite, die eine Vielzahl von Kanälen (30) zum Stützen und Bewegen der Logs (100) zwischen einer Einlassstation (4) und einer Auslassstation (5) entlang eines Wegs mit geschlossener Schleife umfassen, der von Ketten (3) bestimmt wird, die eine Vielzahl von Serpentinen bilden, **dadurch gekennzeichnet, dass** der Sammler (1) an der Einlassstation (4) ein System zum statischen Wiegen (10) der Logs (100) umfasst.

2. Sammler nach Anspruch 1, **dadurch gekennzeichnet, dass** das Wiegesystem (10) eine Querhalterung (20) zum Stützen der Logs aufweist, die von seitlichen Strukturen (14) getragen werden, die auf Wägezellen (22) befestigt sind.

3. Sammler nach Anspruch 2, wobei die Halterung (20) aus diskontinuierlichen Seitenplatten (21) besteht, die nach unten konvergieren und einen leeren Raum zwischen ihnen bestimmen.

4. Sammler nach Anspruch 3, **dadurch gekennzeichnet, dass** die Kanäle (30) eine Breite aufweisen, die kleiner als die Halterung (20) ist, und aus divergierenden, diskontinuierlichen Seitenplatten bestehen, die von einem Querstab (32) aufsteigen und zwischen den Platten (21) der Halterung (20) interkaliert sind.

5. Sammler nach einem der Ansprüche 2 bis 4, **dadurch gekennzeichnet, dass** er eine Rutsche (22) und eine annähernd vertikal anliegende Widerlagerfläche (23) umfasst, die jeweils stromaufwärts und stromabwärts der Halterung (20) angeordnet sind, um das Ablegen von Logs in der Halterung (20) zu ermöglichen.

6. Sammler nach Anspruch 4, wobei sich die Mittellinie der Halterung (20) ungefähr in derselben vertikalen Ebene befindet, in der sich die Mittellinie der Kanäle (30) in dem ersten vertikalen Abschnitt (3') der Ketten (3) befindet.

7. Sammler nach einem der vorhergehenden Ansprüche, wobei in dem Sammler ein vertikal bewegliches Querstück (6) bereitgestellt ist, das ausgelegt ist, sowohl im Vorwärtsweg zwischen dem Einlass (4) und dem Auslass (5) der Logs als auch auf dem Rückweg zwischen Auslass und Einlass Serpentinen zu bilden, wobei die Bewegung des Querstücks (6) den Gesamtweg der Logs zwischen Einlass und Auslass variiert, um die Unterschiede in der Produktionsgeschwindigkeit zwischen der stromaufwärtigen Linie und der stromabwärtigen Linie auszugleichen.

## Revendications

1. Accumulateur (1) de rouleaux (100) en matériau en feuille destiné à être placé entre une ligne de production de rouleaux en amont et une ligne en aval pour un traitement ultérieur, tel que la découpe en rouleaux de largeur prédéterminée, comprenant une pluralité de canaux (30) pour supporter et déplacer les rouleaux (100) entre un poste d'entrée (4) et un poste de sortie (5) le long d'un trajet en boucle fermée par des chaînes (3) formant une pluralité de serpentins, **caractérisé en ce que** ledit accumulateur (1) présente, sur ledit poste d'entrée (4), un système de pesée statique (10) des rouleaux (100).

2. Accumulateur selon la revendication 1, **caractérisé en ce que** ledit système de pesée (10) comprend une balancelle transversale (20) pour supporter les rouleaux portés par des structures latérales (14) montées sur des cellules de pesage (22).

3. Accumulateur selon la revendication 2, dans lequel ladite balancelle (20) consiste en des plaques latérales discontinues (21) convergeant vers le bas et déterminant un espace vide entre elles.

4. Accumulateur selon la revendication 3, **caractérisé en ce que** lesdits canaux (30) présentent une largeur inférieure à ladite balancelle (20) et consistent en des plaques latérales divergentes discontinues, s'élevant d'une barre transversale (32) et intercalées entre lesdites plaques (21) de la balancelle (20).

5. Accumulateur selon l'une quelconque des revendications 2 à 4, **caractérisé en ce qu'**il comprend une glissière (22) et une surface de butée (23) approximativement verticale, placées respectivement en amont et en aval de la balancelle (20) pour faciliter la chute de rouleaux dans la balancelle (20).

6. Accumulateur selon la revendication 4, dans lequel la ligne centrale de la balancelle (20) est située approximativement sur le même plan vertical où la ligne centrale des canaux (30) avançant dans la première section verticale (3') des chaînes (3) est placée.

7. Accumulateur selon l'une quelconque des revendications précédentes, dans lequel dans l'accumulateur est prévue une pièce transversale (6) mobile verticalement conçue pour former des serpentins à la fois dans le trajet d'avancée entre l'entrée (4) et la sotie (5) des rouleaux, et dans le trajet de retour entre sortie et entrée, le mouvement de ladite pièce transversale (6) faisant varier le trajet total des rouleaux entre entrée et sortie de façon à compenser les différences de vitesse de production entre la ligne en amont et la ligne en aval.
